# FASCICULE DE BREVET EUROPEEN

(11) **EP 3 449 228 B1**
(45) Date de publication et mention de la délivrance du brevet: **21.09.2022**
(21) Numéro de dépôt: 17731606.4
(22) Date de dépôt: 27.04.2017
(51) Int. Cl.: G01J 3/02, G01J 3/28, G02B 3/00, G02B 19/00, G02B 5/20

(54) **DISPOSITIF D'IMAGERIE MULTISPECTRALE**
MULTISPEKTRALE BILDGEBUNGSVORRICHTUNG
MULTI-SPECTRAL IMAGING DEVICE

(30) Priorité: 29.04.2016 FR 1600716
(43) Date de publication de la demande: 06.03.2019
(73) Titulaire: Silios Technologies, 13790 Peynier (FR)
(72) Inventeur: TISSERAND, Stéphane, 13400 Aubagne (FR); ROUX, Laurent, 13013 Marseille (FR); HUBERT, Marc, 13710 Fuveau (FR); SAUGET, Vincent, 13100 Aix-en-Provence (FR); FAIOLA, Aurélien, 13013 Marseille (FR)
(74) Mandataire: IP Trust
(86) Numéro de dépôt international: PCT/FR2017/000076
(87) Numéro de publication internationale: WO 2017/187029

(56) Documents cités:
- CN-A- 104 457 708
- US-A1- 2011 049 340
- US-A1- 2014 268 146
- Anonymous: "Hamamatsu Learning Center: Microlens Arrays", , 2 mai 2015 (2015-05-02), XP055356158, Extrait de l'Internet: URL:http://web.archive.org/web/20150502194 209/http://hamamatsu.magnet.fsu.edu/articl es/microlensarray.html [extrait le 2017-03-17]
- Anonymous: "Hamamatsu Learning Center: Microlens Arrays", , 2 May 2015 (2015-05-02), pages 1-3, XP55925467, Retrieved from the Internet: URL:http://web.archive.org/web/20150502194 209/http://hamamatsu.magnet.fsu.edu/articl es/microlensarray.html [retrieved on 2022-05-27]

## Description

La présente invention concerne un dispositif d'imagerie multispectrale.

L'analyse spectrométrique vise notamment la recherche de constituants chimiques entrant dans la composition d'un milieu solide, liquide ou gazeux. Il s'agit d'enregistrer le spectre d'absorption en réflexion ou en transmission de ce milieu. La lumière qui interagit avec celui-ci est absorbée dans certaines bandes de longueurs d'onde. Cette absorption sélective est une signature d'une partie ou de l'ensemble des constituants du milieu. La plage de longueurs d'onde du spectre à mesurer peut appartenir à l'ultra violet et/ou au rayonnement visible et/ou à l'infra rouge (proche, moyen, lointain).

Cette analyse se fait couramment au moyen d'un spectromètre.

Certains spectromètres utilisent au moins un filtre Fabry-Pérot.

Pour mémoire, un tel filtre est une lame à face parallèle d'un matériau (le plus souvent d'indice de réfraction faible tel que air, silice, ...) appelé membrane d'espacement (plus couramment « spacer » en terminologie anglo-saxonne), cette membrane figurant entre deux miroirs. Il est souvent réalisé par dépôt de couches minces sous vide. Ainsi, pour un filtre dont la bande passante est centrée sur une longueur d'onde centrale λ, le premier miroir consiste en m alternances de couches d'épaisseur optique λ/4 d'un matériau haut indice H et d'un matériau bas indice B. Ce miroir peut également être une couche mince métallique semi-réfléchissante. La membrane d'espacement consiste fréquemment en 2 couches du matériau bas indice B d'épaisseur optique λ/4. En général le second miroir est symétrique du premier. La modification de l'épaisseur géométrique de la membrane d'espacement permet d'accorder le filtre à la longueur d'onde centrale pour laquelle l'épaisseur optique vaut un multiple de λ/2.

Une technique connue s'appuie sur un module de filtrage comportant un filtre par bande à analyser. Si le nombre de bandes vaut n, la réalisation de n filtres passe donc par n fabrications distinctes en dépôt sous vide. Le coût est ainsi très important (et quasi-proportionnel au nombre n de bandes) pour les petites séries et ne devient réellement intéressant que pour des séries suffisamment importantes. De plus, ici aussi les possibilités de miniaturisation sont très limitées et il est difficilement envisageable de prévoir un grand nombre de filtres.

Une alternative développée plus récemment met en oeuvre un module de filtrage du type Fabry-Pérot, les deux miroirs n'étant plus parallèles mais agencés en forme de coin pour ce qui concerne le profil dans un plan perpendiculaire au substrat. Dans ce plan repéré Oxy, les axes Ox et Oy étant respectivement colinéaire et perpendiculaire au substrat, l'épaisseur selon Oy de la membrane d'espacement varie linéairement en fonction de la position selon Ox où elle est mesurée.

Le document US 2006 / 0209413 enseigne un dispositif de spectroscopie en longueur d'onde comportant un tel module de filtrage. Il s'ensuit que la longueur d'onde d'accord varie ici de manière continue selon l'axe Ox.

Ces différentes technologies permettent d'analyser un objet avec une résolution spectrale satisfaisante lorsque l'on recherche un spectre continu.

Elles sont également bien adaptées dans le cas où un nombre fini de bandes passantes relativement fines (c'est-à-dire un spectre discret par opposition à un spectre continu) est suffisant pour identifier les constituants recherchés.

Toutefois, elles considèrent l'objet à analyser comme une entité indissociable, c'est-à-dire non résolu spatialement, et elles ne sont pas aptes à identifier des variations de transmission ou de réflexion optique au sein même de l'objet.

Ainsi, le document FR 2 904 432 enseigne une structure matricielle de filtrage optique et un capteur d'images associé. Il s'agit ici de parvenir à l'obtention des différentes couleurs. En effet, à partir de trois couleurs fondamentales prélevées dans le spectre visible (rouge, vert, bleu), on peut reconstituer la majorité des couleurs.

Dans le cas présent, on utilise une matrice de filtres disposée à la surface d'une matrice de détecteurs. La matrice de filtres est ici une matrice dite de « Bayer » mais cela importe peu pour la présente invention. La matrice de détecteurs est une matrice dite APS CMOS (« Active Pixel Sensor Complementary Metal Oxide Semiconductor » en terminologie anglaise). Cette matrice est implémentée sur un substrat semiconducteur à la surface duquel sont agencés des zones photosensibles, des circuits électroniques et des connexions électriques.

Sur un pixel élémentaire, la zone photosensible ne représente qu'une partie de la surface totale, le reste de la surface étant occupée par l'électronique de commande. Il faut donc prévoir des microlentilles, une par pixel, pour focaliser la lumière incidente sur la zone photosensible du pixel. La matrice de filtres est agencée au contact du détecteur si bien que l'ensemble se présente comme un composant consistant en un empilement détecteurs-filtres-microlentilles.

En effet, il n'est pas envisageable de déposer la matrice de filtres sur les microlentilles car la topologie de ces derniers est très marquée. De plus, les microlentilles sont en résine si bien qu'il semble délicat de réaliser un filtre inorganique sur un matériau organique.

Or l'ouverture angulaire du faisceau incident sur les filtres est importante quand ces derniers sont disposés sous les microlentilles. La réponse des filtres est très liée à cet angle d'incidence. Il s'ensuit une modification de la réponse spectrale.

A ce sujet, le document US 2014/0268146 enseigne un réseau de microlentilles avec filtres passe-bande intégrés auquel un détecteur est adjoint. Par ailleurs, il y a un déflecteur entre entre le réseau de microlentilles et le détecteur.

Pour éviter ce problème d'incidence angulaire sur les filtres on pourrait envisager de supprimer les microlentilles. Toutefois, la zone photosensible présente une surface réduite par référence à la surface totale du pixel. Le gain en sensibilité apporté par la microlentille est d'environ 50%. Il semble donc inapproprié de perdre en sensibilité en supprimant les microlentilles.

Il faut par ailleurs mentionner que le rendement de fabrication d'un tel composant est relativement faible. Le rendement global est sensiblement égal au produit des trois rendements suivants :
- fabrication du détecteur,
- fabrication de la matrice de filtres,
- fabrication du réseau de microlentilles.

Il s'ensuit qu'en multipliant les opérations de fabrication, on réduit le rendement global en conséquence.

La présente invention a ainsi pour objet un dispositif d'imagerie multispectrale qui ne présente pas les limitations évoquées ci-dessus.

Selon l'invention, un dispositif d'imagerie multispectrale comporte : les caractéristiques de la revendication 1. Les modifications favorables sont définies dans les revendications dépendantes.

Les filtres sont disposés au-dessus des microlentilles pour éviter les problèmes liés à l'angle d'incidence sur ces filtres.

En conservant les microlentilles on conserve la sensibilité du dispositif.

Pour ce qui concerne le rendement de fabrication, le dispositif selon l'invention présente un avantage indéniable. On peut en effet trier les modules de filtrage pour les associer à des détecteurs qui sont eux aussi triés.

D'autre part, il y a une grande souplesse dans le choix de la configuration du module de filtrage et du détecteur. Il est possible d'adapter le filtrage à un grand nombre de détecteurs pour s'attacher à une caractéristique particulière de l'imageur : résolution, sensibilité, bruit...

Le module de filtrage est collé sur son pourtour au détecteur.

Il n'y a pas de colle entre le module de filtrage et le détecteur par opposition au collage sur toute la surface.

Un premier avantage de cette solution réside dans la conservation de la fonction optique des microlentilles, ce qui assure un gain de 50% du flux lumineux au niveau de la zone photosensible. La présence de colle entre le module de filtrage et les microlentilles réduit considérablement l'efficacité de ces dernières car la colle a un indice de réfraction voisin de celui des lentilles.

Un second avantage de cette solution tient au fait que les franges d'interférence dues à la lame d'air inévitable entre le module de filtrage et le détecteur sont beaucoup moins contrastées qu'en présence de colle (environ 10 fois moins).

Suivant une caractéristique additionnelle, le module de filtrage est pourvu de motifs d'alignement.

Selon un mode de réalisation privilégié, le module de filtrage étant constitué de deux miroirs séparés par une membrane d'espacement, ce module de filtrage comportant une pluralité de cellules de filtrage, les cellules de filtrage comportent chacune au moins deux filtres.

De préférence, l'un au moins des filtres a une fonction de transfert passe-bande.

Suivant un agencement particulier, certains au moins des filtres sont alignés dans un premier ruban.

De même, certains au moins des filtres sont alignés dans un second ruban parallèle au et disjoint du premier ruban.

Avantageusement, deux au moins des filtres qui sont adjacents sont séparés par une barrière de diaphonie.

Suivant une autre caractéristique , le détecteur est intégré en technologie CMOS.

Eventuellement, l'un au moins des filtres est panchromatique.

L'avantage d'adopter un filtre à large bande spectrale est qu'il donne une référence photométrique sur l'image. Le niveau de flux intégré sur cette bande spectrale est équivalent au flux contenu dans les bandes de « couleur ». On évite ainsi l'aveuglement des pixels voisins du pixel panchromatique.

La présente invention apparaîtra maintenant avec plus de détails dans le cadre de la description qui suit d'exemples de réalisation donnés à titre illustratif en se référant aux figures annexées qui représentent :
- la figure 1, le schéma de principe d'une cellule de filtrage à une dimension, plus particulièrement :
   - la figure 1a, une vue de dessus de cette cellule, et
   - la figure 1b, une vue en coupe de cette cellule ;
- les figures 2a à 2c, trois étapes d'un premier mode de réalisation d'un module de filtrage ;
- les figures 3a à 3f, six étapes d'un deuxième mode de réalisation de ce module de filtrage ;
- la figure 4, le schéma de principe d'un module de filtrage à deux dimensions ;
- la figure 5, un schéma d'un module de filtrage à 64 filtres muni d'un quadrillage d'écrantage ;
- la figure 6, le schéma d'un module de filtrage dont les cellules comportent chacune neuf filtres ;
- la figure 7, un schéma en coupe d'un dispositif selon l'invention.

Les éléments présents dans plusieurs figures sont affectés d'une seule et même référence.

On commence par décrire le module de filtrage qui comporte une pluralité de cellules de filtrage généralement identiques.

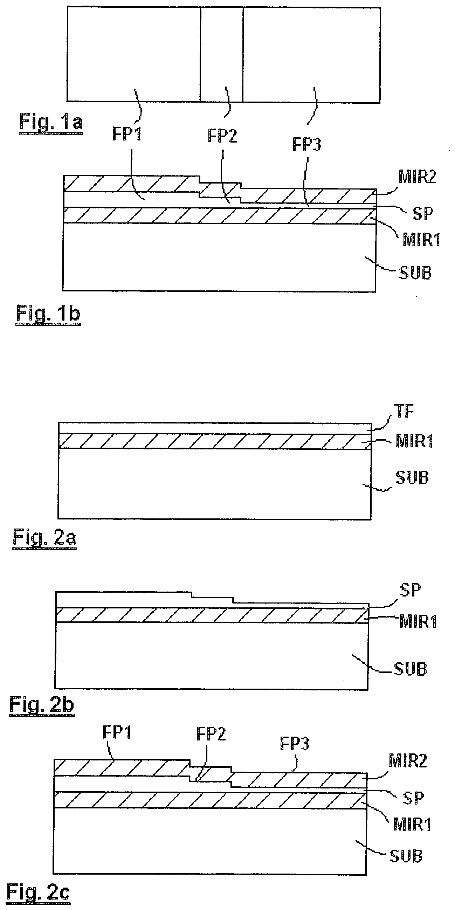

En référence aux figures 1a et 1b, une cellule de filtrage comporte trois filtres interférentiels du type Fabry-Pérot FP1, FP2, FP3 alignés successivement de sorte qu'ils forment un ruban.

Cette cellule est constituée par l'empilement sur un substrat SUB, en verre ou en silice par exemple, d'un premier miroir M1, d'une membrane d'espacement SP et d'un deuxième miroir MIR2.

La membrane d'espacement SP qui définit la longueur d'onde centrale de chaque filtre est donc constante pour un filtre donné et varie d'un filtre à l'autre. Son profil a une forme d'escalier car chaque filtre a une surface sensiblement rectangulaire.

Un premier procédé de réalisation du module de filtrage en technologie couches minces est donné à titre d'exemple.

En référence à la figure 2a, on commence par déposer sur le substrat SUB le premier miroir MIR1 puis une couche ou un ensemble de couches diélectriques TF appelé à définir la membrane d'espacement SP. Le miroir est soit métallique soit diélectrique.

En référence à la figure 2b, ce diélectrique TF est gravé :
- dans un premier temps au niveau des deuxième FP2 et troisième FP3 filtres pour définir l'épaisseur de la membrane d'espacement SP au niveau du 2^{ème} filtre FP2,
- dans un deuxième temps au niveau du troisième filtre FP3 pour définir à son niveau l'épaisseur de cette membrane.

La membrane d'espacement SP au niveau du premier filtre FP1 a l'épaisseur du dépôt.

En référence à la figure 2c, le deuxième miroir MIR2 est déposé sur la membrane d'espacement SP pour finaliser les trois filtres.

La membrane d'espacement SP peut être obtenue par dépôt d'un diélectrique TF puis gravures successives comme présenté ci-dessus mais elle peut également être obtenue par plusieurs dépôts successifs de couches minces.

A titre d'exemple, on peut balayer la plage de longueurs d'onde 800 à 1 000 nm en modifiant l'épaisseur optique de la membrane d'espacement de 1,4 λ₀/2 à 2,6 λ₀/2 (pour λ₀ = 900 nm et n=1,45 tandis que e varie entre 217 nm et 403 nm).

Il convient ici de noter que l'épaisseur de la membrane d'espacement doit être suffisamment faible pour n'obtenir qu'une bande de transmission dans le domaine à sonder. En effet, plus on augmente cette épaisseur, plus le nombre de longueurs d'onde satisfaisant la condition [ne = k λ/2] augmente.

Un deuxième procédé de réalisation du module de filtrage est maintenant exposé.

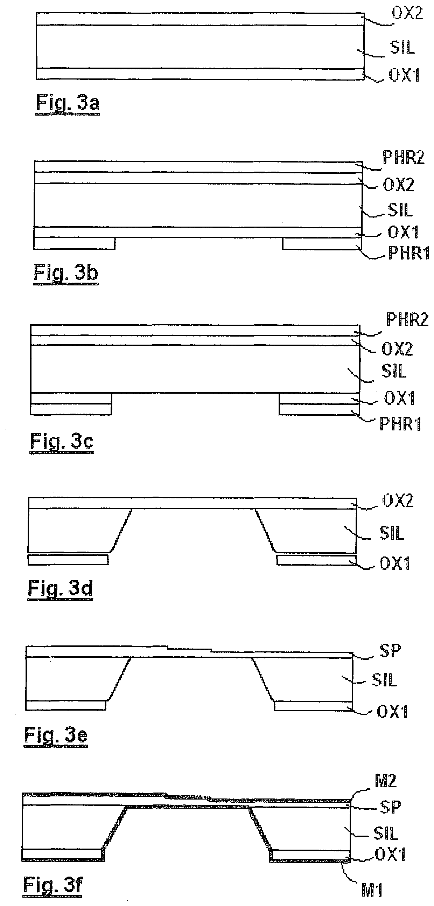

En référence à la figure 3a, on commence par pratiquer une oxydation thermique d'un substrat SIL en silicium sur sa face inférieure OX1 et sur sa face supérieure OX2.

En référence à la figure 3b, les faces inférieure OX1 et supérieure OX2 du substrat sont recouvertes respectivement d'une couche inférieure PHR1 et d'une couche supérieure PHR2 de résine photosensible. Ensuite, une ouverture rectangulaire est pratiquée dans la couche inférieure PHR1 par photolithographie.

En référence à la figure 3c, l'oxyde thermique de la face inférieure OX1 est gravé au droit de l'ouverture rectangulaire pratiquée dans la couche inférieure PHR1. Les couches inférieure PHR1 et supérieure PHR2 sont alors retirées.

En référence à la figure 3d, on réalise une gravure anisotrope du substrat SIL (orientation cristallographique 1 - 0 - 0 par exemple) au droit de l'ouverture rectangulaire, l'oxyde thermique de la face inférieure OX1 servant de masque et celui de la face supérieure OX2 servant de couche d'arrêt de gravure. Il peut s'agir soit d'une gravure humide au moyen d'une solution de potasse (KOH) ou de triméthyl ammonium hydroxyle (TMAH) soit d'une gravure sèche en plasma. Il résulte de cette opération que seule subsiste au fond de l'ouverture rectangulaire une membrane d'oxyde.

En référence à la figure 3e, cet oxyde est gravé :
- dans un premier temps au niveau des deuxième FP2 et troisième FP3 filtres pour définir l'épaisseur de la membrane d'espacement SP au niveau du 2^{ème} filtre FP2,
- dans un deuxième temps au niveau du troisième filtre FP3 pour définir à son niveau l'épaisseur de cette membrane SP.

En référence à la figure 3f, les premier M1 et deuxième M2 miroirs sont déposés sur les faces inférieure OX1 et supérieure OX2 du substrat SIL.

On peut éventuellement terminer la réalisation du module de filtrage en déposant une couche de passivation (non représentée) sur l'une et/ou sur l'autre des faces inférieure OX1 et supérieure OX2.

L'invention permet donc de réaliser un ensemble de filtres alignés, ces filtres pouvant ainsi être référencés dans un espace à une dimension.

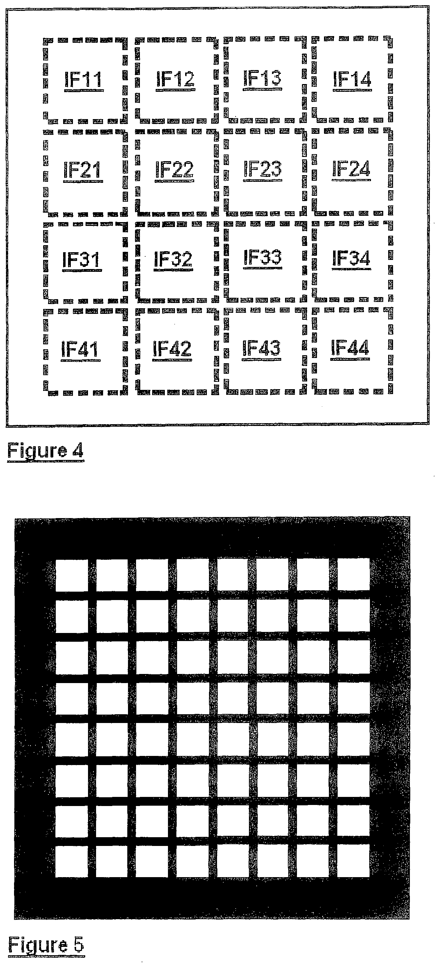

En référence à la figure 4, l'invention permet également d'organiser les cellules de filtrage dans un espace à deux dimensions. Une telle organisation est souvent dénommée matricielle.

Quatre rubans horizontaux identiques comprennent chacun quatre cellules. Le premier ruban, celui qui apparaît en haut de la figure, correspond à la première ligne d'une matrice et comprend les cellules IF11 à IF14. Le deuxième, le troisième, respectivement le quatrième ruban comprend les cellules IF21 à IF24, les filtres IF31 à IF34, respectivement les cellules IF41 à IF44.

L'organisation est dite matricielle car la cellule IFjk appartient au jème ruban horizontal et également à un kième ruban vertical qui comprend les cellules IF1k, IF2k, ..., IF4k.

En référence à la figure 5, il est souhaitable de bien séparer les différents filtres du module de filtrage afin d'éviter un recouvrement partiel d'un filtre sur un filtre qui lui est adjacent et de minimiser un éventuel problème de diaphonie. Pour ce faire, on peut ajouter sur le module de filtrage un quadrillage (en noir sur la figure) constituant une barrière de diaphonie pour délimiter tous les filtres. Ce quadrillage sera absorbant. A titre d'exemple, un quadrillage absorbant peut être réalisé par dépôt et gravure d'un chrome noir (chrome + oxyde de chrome) tandis qu'un quadrillage réfléchissant peut être réalisé par dépôt et gravure de chrome.

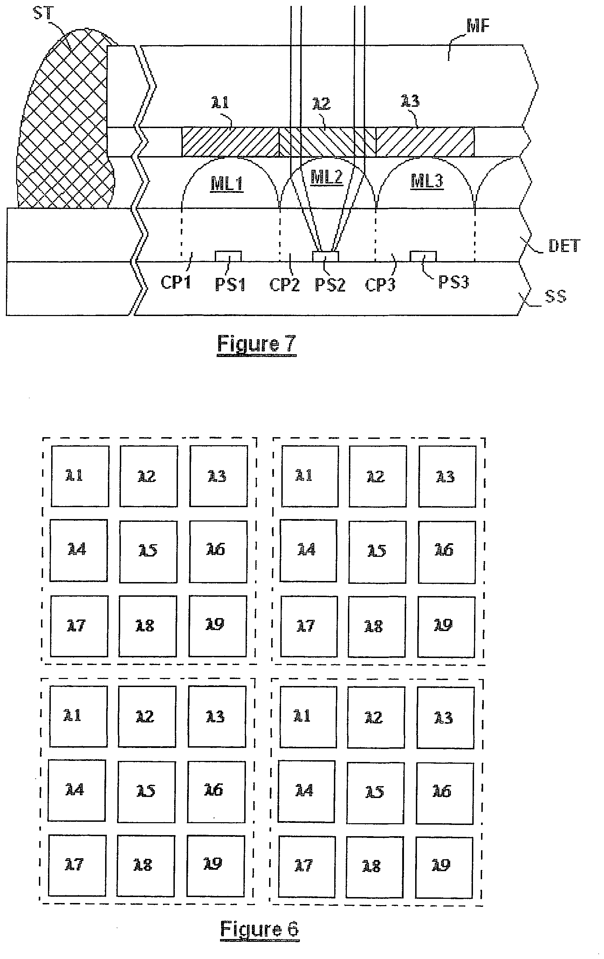

En référence à la figure 6, chaque cellule de filtrage comporte dorénavant 9 filtres. Ces cellules se présentent chacune comme un carré dans lequel s'inscrit chaque filtre accordé sur une longueur d'onde distincte λ1, λ2, λ3, λ4, ..., λ9.

Sur cette figure, pour des raisons de clarté, l'espacement entre les cellules a été volontairement augmenté par rapport à l'espacement entre deux filtres. Dans la réalité, bien entendu, ces espacements sont identiques.

Le module de filtrage est donc associé à un détecteur à même de mesurer les flux lumineux produits par les différents filtres. Ce détecteur est donc formé d'une pluralité de compartiments.

En référence à la figure 7, on reprend le module de filtrage MF qui est présenté à la figure 6.

Le détecteur DET est réalisé en technologie CMOS sur un substrat SS en silicium. Au centre de chaque compartiment CP1, CP2, CP3 de forme carrée figure une zone photosensible PS1, PS2, PS3.

Au-dessus de chaque compartiment CP1, CP2, CP3 figure une microlentille ML1, ML2, ML3 dont le diamètre est égal au côté du compartiment.

Le module de filtrage MF vient en appui sur le réseau de microlentilles ML1, ML2, ML3 de sorte que les filtres λ1, λ2, λ3 soient en regard des microlentilles ML1, ML2, ML3.

Le positionnement de ce module MF se fait au moyen de motifs d'alignement, technique connu en photolithographie par l'homme du métier qui ne sera donc pas plus développée.

Le module de filtrage MF est fixé sur le détecteur DET au moyen d'un liseré de colle ST.

Pour fixer les idées, on précisera que les pixels ont couramment une taille de l'ordre de 5 microns.

Les exemples de réalisation de l'invention présentés ci-dessus ont été choisis eu égard à leur caractère concret. Il ne serait cependant pas possible de répertorier de manière exhaustive tous les modes de réalisation que recouvre cette invention.

## Revendications

1. Dispositif d'imagerie multispectrale comportant :
- un détecteur (DET) photosensible formé en technologie CMOS sur un premier substrat (SS) en silicium et comprenant une matrice de pixels avec des compartiments (CP1, CP2, CP3) comprenant chacun une zone photosensible (PS1, PS2, PS3) en son centre,
- un réseau de microlentilles (ML1, ML2, ML3) de focalisation de lumière incidente sur les zones photosensibles des pixels, le réseau de microlentilles répliquant cette matrice de pixels,
- un module de filtrage (MF) formé d'une matrice de filtres élémentaires (λ1, λ2, λ3) répliquant cette matrice de pixels,
**caractérisé en ce que** les filtres élémentaires sont de type Fabry-Pérot, **en ce que** la longueur d'onde centrale de chaque filtre est constante pour un filtre donné et varie d'un filtre à l'autre, **en ce que** le réseau de microlentilles est agencé directement au contact du détecteur, ledit module de filtrage étant réalisé sur un deuxième substrat (SUB, SIL) qui est rapporté en appui et au contact dudit réseau de microlentilles, et **en ce que** ledit module de filtrage (MF) est collé sur son pourtour audit détecteur (DET) au moyen d'un liseré de colle (ST).

2. Dispositif selon la revendication 1, **caractérisé en ce que** ledit module de filtrage (MF) est pourvu de motifs d'alignement.

3. Dispositif selon l'une quelconque des revendications précédentes **caractérisé en ce que**, ledit module de filtrage (MF) étant constitué de deux miroirs (MIR1, MIR2 ; M1, M2) séparés par une membrane d'espacement (SP), ce module de filtrage comportant une pluralité de cellules de filtrage (IF11, IF12, ... , IF44), lesdites cellules de filtrage comportent chacune au moins deux filtres (FP1, FP2).

4. Dispositif selon la revendication 3, **caractérisé en ce que** l'un au moins desdits filtres (FP1, FP2, FP3) a une fonction de transfert passe-bande.

5. Dispositif selon l'une quelconque des revendications 3 ou 4, **caractérisé en ce que** certains au moins desdites cellules de filtrage (IF11, IF12, IF13, IF14) sont alignés dans un premier ruban.

6. Dispositif selon la revendication 5, **caractérisé en ce que** certains au moins desdites cellules de filtrage (IF21-IF24) sont alignés dans un second ruban parallèle au et disjoint du premier ruban.

7. Dispositif selon l'une quelconque des revendications 3 à 6, **caractérisé en ce que** deux au moins desdits filtres (FP1, FP2, FP3) qui sont adjacents sont séparés par une barrière de diaphonie.

8. Dispositif selon l'une quelconque des revendications 3 à 7, **caractérisé en ce que** l'un au moins desdits filtres (FP1, FP2, FP3) est panchromatique.

## Patentansprüche

1. Multispektrale Abbildungsvorrichtung, umfassend:
- einen lichtempfindlichen Detektor (DET), der mit CMOS-Technologie auf einem ersten Siliziumsubstrat (SS) ausgebildet ist und eine Pixelmatrix mit Abteilen (CP1, CP2, CP3) enthält, die jeweils einen lichtempfindlichen Bereich (PS1, PS2, PS3) in ihrem Zentrum enthalten,
- ein Array von Mikrolinsen (ML1, ML2, ML3) zum Fokussieren von einfallendem Licht auf die lichtempfindlichen Bereiche der Pixel, wobei das Array von Mikrolinsen diese Pixelmatrix repliziert,
- ein Filtermodul (MF), das aus einer Matrix von Elementarfiltern (λ1, λ2, λ3) ausgebildet ist, die diese Pixelmatrix replizieren,
**dadurch gekennzeichnet, dass** die Elementarfilter von der Fabry-Pérot-Art sind, dass die mittlere Wellenlänge jedes Filters für einen gegebenen Filter konstant ist und von einem Filter zu dem anderen variiert, dass das Array von Mikrolinsen in direktem Kontakt mit dem Detektor angeordnet ist, wobei das Filtermodul auf einem zweiten Substrat (SUB, SIL) hergestellt ist, das in Anlage und in Kontakt mit dem Array von Mikrolinsen angebracht ist, und dass das Filtermodul (MF) an seiner Peripherie mit dem Detektor (DET) mittels eines Kleberands (ST) verklebt ist.

2. Vorrichtung nach Anspruch 1, **dadurch gekennzeichnet, dass** das Filtermodul (MF) mit Ausrichtungsmustern versehen ist.

3. Vorrichtung nach einem der vorstehenden Ansprüche, **dadurch gekennzeichnet, dass** das Filtermodul (MF) aus zwei Spiegeln (MIR1, MIR2; M1, M2) besteht, die durch eine Abstandsmembran (SP) abgetrennt sind, wobei dieses Filtermodul eine Vielzahl von Filterzellen umfasst (IF11, IF12, ... , IF44), wobei die Filterzellen jeweils mindestens zwei Filter (FP1, FP2) umfassen.

4. Vorrichtung nach Anspruch 3, **dadurch gekennzeichnet, dass** mindestens einer der Filter (FP1, FP2, FP3) eine Bandpassübertragungsfunktion aufweist.

5. Vorrichtung nach einem der Ansprüche 3 oder 4, **dadurch gekennzeichnet, dass** mindestens einige der Filterzellen (IF11, IF12, IF13, IF14) in einem ersten Band ausgerichtet sind.

6. Vorrichtung nach Anspruch 5, **dadurch gekennzeichnet, dass** mindestens einige der Filterzellen (IF21-IF24) in einem zweiten Band parallel zu und getrennt von dem ersten Band ausgerichtet sind.

7. Vorrichtung nach einem der Ansprüche 3 bis 6, **dadurch gekennzeichnet, dass** mindestens zwei der benachbarten Filter (FP1, FP2, FP3) durch eine Übersprechbarriere abgetrennt sind.

8. Vorrichtung nach einem der Ansprüche 3 bis 7, **dadurch gekennzeichnet, dass** mindestens einer der Filter (FP1, FP2, FP3) panchromatisch ist.

## Claims

1. Multispectral imaging device comprising:
- a photosensitive detector (DET) formed in CMOS technology on a first silicon substrate (SS) and comprising a matrix of pixels having compartments (CP1, CP2, CP3) which each comprise a photosensitive zone (PS1, PS2, PS3) at the center thereof,
- an array of microlenses (ML1, ML2, ML3) for focusing incident light on the photosensitive zones of the pixels, the array of microlenses replicating this matrix of pixels,
- a filtering module (MF) made of a matrix of elementary filters (λ1, λ2, λ3) which replicates this matrix of pixels,
**characterized in that** the elementary filters are of the Fabry-Perot type, **in that** the central wavelength of each filter is constant for a given filter and varies from one filter to another, **in that** the array of microlenses is arranged directly in contact with the detector, said filtering module being produced on a second substrate (SUB, SIL) which is applied in abutment and in contact with said array of microlenses, and **in that** said filtering module (MF) is glued on its periphery to said detector (DET) by means of a strip of glue (ST).

2. Device according to claim 1, **characterized in that** said filtering module (MF) is provided with alignment patterns.

3. Device according to either of the preceding claims, **characterized in that** said filtering module (MF) consists of two mirrors (MIR1, MIR2; M1, M2) which are separated by a spacing membrane (SP), this filtering module comprising a plurality of filtering cells (IF11, IF12, ..., IF44), said filtering cells each comprising at least two filters (FP1, FP2).

4. Device according to claim 3, **characterized in that** at least one of said filters (FP1, FP2, FP3) has a band-pass transfer function.

5. Device according to either claim 3 or claim 4, **characterized in that** at least some of said filtering cells (IF11, IF12, IF13, IF14) are aligned in a first strip.

6. Device according to claim 5, **characterized in that** at least some of said filtering cells (IF21-IF24) are aligned in a second strip in parallel with and separate from the first strip.

7. Device according to any of claims 3 to 6, **characterized in that** at least two of said filters (FP1, FP2, FP3) which are adjacent are separated by a crosstalk barrier.

8. Device according to any of claims 3 to 7, **characterized in that** at least one of said filters (FP1, FP2, FP3) is panchromatic.
